# FASCICULE DE BREVET EUROPEEN

(11) **EP 0 604 279 B1**
(45) Date de publication et mention de la délivrance du brevet: **05.03.1997**
(21) Numéro de dépôt: 93403070.1
(22) Date de dépôt: 17.12.1993
(51) Int. Cl.: F02K 9/52

(54) **Injecteur avec paroi poreuse pour chambre de combustion d'une fusée**
Injektor mit einer porösen Wand für eine Raketenbrennkammer
Injector with porous wall for a rocket combustion chamber

(30) Priorité: 24.12.1992 FR 9215719
(43) Date de publication de la demande: 29.06.1994
(73) Titulaire: SOCIETE EUROPEENNE DE PROPULSION, 92150 Suresnes (FR)
(72) Inventeur: Vuillamy, Didier, F-76230 Quincampoix (FR); Tiret, Etienne, F-27950 La Chapelle Reanville (FR); Beaurain, André, F-60230 Chambly (FR)
(74) Mandataire: Thévenet, Jean-Bruno

(56) Documents cités:
- GB-A- 815 596
- GB-A- 1 046 909
- US-A- 2 405 785
- US-A- 2 487 435
- US-A- 2 698 514
- US-A- 3 242 670
- US-A- 3 608 833
- US-A- 4 377 067

## Description

### Domaine de l'invention

La présente invention concerne un générateur de gaz à combustion rapprochée, comprenant des moyens d'alimentation en un premier ergol liquide et des moyens d'alimentation en un deuxième ergol liquide tel que décrit par example dans le document US-A-4 377 067.

L'invention s'applique à tous les domaines où l'on doit produire dans un ensemble compact, un flux de gaz chauds. C'est le cas par exemple dans le domaine spatial où un générateur de gaz est utilisé pour l'entraînement de turbines de turbopompes.

### Art antérieur

On connaît déjà divers types de générateurs de gaz, en particulier des générateurs de gaz utilisant des injecteurs coaxiaux permettant de réaliser, lors de l'injection dans une chambre de combustion, un mélange d'un ergol combustible et d'un ergol comburant. Les générateurs de gaz connus impliquent toutefois l'existence d'une chambre de combustion de relativement grandes dimensions du fait que le mélange d'ergols est projeté relativement loin de la plaque d'injection dans laquelle sont placés les injecteurs.

Le mélange des ergols n'est par ailleurs pas toujours suffisamment homogène.

### Objet et description succincte de l'invention

L'invention vise à remédier aux inconvénients précités et à permettre la réalisation d'un générateur de gaz de faible encombrement et de réalisation simple, dans lequel le mélange des ergols peut être effectué de façon homogène et stable, même avec des débits importants, à faible distance de la paroi portant les moyens d'injection, et qui évite l'utilisation d'injecteurs classiques.

Ces buts sont atteints grâce à un générateur de gaz à combustion rapprochée, comprenant des moyens d'alimentation en un premier ergol liquide et des moyens d'alimentation en un deuxième ergol liquide, une pièce poreuse principale, à travers laquelle un débit de circulation du premier ergol liquide est injecté vers une chambre de combustion délimitée par l'une des faces de la pièce poreuse et des moyens pour injecter un débit du deuxième ergol dans la pièce poreuse ou à proximité immédiate de la face de la pièce poreuse délimitant la chambre de combustion de manière à provoquer un mélange des premier et deuxième ergols dans la pièce poreuse ou à proximité immédiate de ladite face de la pièce poreuse délimitant la chambre de combustion, caractérisé en ce que la pièce poreuse principale présente une forme annulaire, en ce que lesdits moyens pour injecter un débit du deuxième ergol sont conformés de manière à provoquer une injection du deuxième ergol qui est essentiellement radiale, en ce qu'au moins une garniture de calibrage est associée à la pièce poreuse principale et en ce que la garniture de calibrage comprend des orifices de calibrage assurant une modulation de la vitesse d'injection du premier ergol liquide dans la chambre de combustion, l'un au moins des paramètres constitués par la dimension des orifices de calibrage, la distance entre les orifices de calibrage voisins et le nombre d'orifices de calibrage par unité de surface étant variable en fonction de la position axiale des orifices de calibrage dans la garniture de calibrage .

Selon un premier mode de réalisation possible les moyens pour injecter radialement un débit du deuxième ergol débouchent dans la chambre de combustion à l'extérieur de la pièce poreuse.

Dans ce cas, le mélange des deux ergols s'effectue dans la chambre de combustion, à l'extérieur de la pièce poreuse, mais à proximité immédiate de celle-ci.

Selon une forme de réalisation particulière, les moyens pour injecter radialement un débit du deuxième ergol comprennent une pluralité de pitots radiaux qui traversent la pièce poreuse de part en part et sont répartis sur toute la hauteur et toute la périphérie du générateur.

Avantageusement, les pitots sont rattachés à une structure de renfort plaquée contre la pièce poreuse sur la face opposée à la face délimitant la chambre de combustion.

Les pitots radiaux peuvent être alimentés à partir d'une chambre annulaire d'alimentation s'étendant sur toute la hauteur du générateur ou encore à partir d'une pluralité de conduits d'alimentation s'étendant sur toute la hauteur du générateur.

Selon un mode de réalisation particulier, des inserts sont montés dans les pitots radiaux et se prolongent par des épanouissements à l'intérieur de la chambre de combustion de manière à produire une injection du deuxième ergol sous la forme d'une nappe sensiblement parallèle à la pièce poreuse.

L'invention concerne également un autre mode de réalisation dans lequel les moyens pour injecter radialement un débit du deuxième ergol débouchent dans la pièce poreuse.

Dans ce cas, le mélange des deux ergols s'effectue au sein même de la pièce poreuse, au voisinage de la chambre de combustion, avant l'injection des ergols dans la chambre, ce qui contribue à améliorer l'homogénéité du mélange et favorise la combustion au plus près de la pièce poreuse.

A titre d'exemple, les moyens pour injecter radialement un débit du deuxième ergol comprennent une cavité annulaire qui est située du côté opposé à la chambre de combustion, s'étend sur toute la hauteur du générateur et se trouve limitée par une garniture de calibrage du côté qui est en contact avec la pièce poreuse de manière à permettre l'injection du deuxième ergol directement dans la pièce poreuse.

Selon un autre exemple de réalisation, les moyens pour injecter radialement un débit du deuxième ergol comprennent des passages longitudinaux formés dans une pièce massive, qui s'étendent le long de la pièce poreuse du côté opposé à la chambre de combustion sur toute la hauteur du générateur et débouchent dans la pièce poreuse par des passages radiaux calibrés.

Dans tous les cas, le générateur de gaz comprend avantageusement une garniture de calibrage placée sur la face de la pièce poreuse qui est située du côté de la chambre de combustion.

Selon un mode particulier de réalisation, dans la zone d'extrémité de la garniture de calibrage constituant la tête du générateur, les orifices de calibrage sont déterminés de manière à définir de faibles débits d'ergol créant une flamme pilote.

Pour certains modes de réalisation, le générateur peut toutefois comprendre également une garniture de calibrage placée sur la face de la pièce poreuse qui est située du côté opposé à la chambre de combustion.

Selon une réalisation particulière, le premier ergol est injecté dans la pièce poreuse par des conduits longitudinaux délimités au moins dans leur partie tournée vers la chambre de combustion par une garniture de calibrage.

La pièce poreuse peut être formée d'un ensemble de nappes de bandes entrelacées. Dans ce cas, une garniture de calibrage peut être réalisée par colmatage de certains des orifices formés aux intersections des bandes entrelacées.

Selon un autre mode de réalisation possible, la pièce poreuse est réalisée à partir de billes de métal comprimées par compression isostatique à chaud.

La pièce poreuse annulaire présente avantageusement une forme essentiellement cylindrique ou tronconique.

La chambre de combustion peut être annulaire et extérieure à la pièce poreuse annulaire ou centrale et intérieure à la pièce poreuse annulaire.

### Brève description des dessins

D'autres caractéristiques et avantages de l'invention ressortiront de la description suivante de modes particuliers de réalisation, donnés à titre d'exemples non limitatifs, en référence aux dessins annexés, sur lesquels :
- la figure 1 est une vue en coupe axiale d'un premier exemple de réalisation d'un générateur de gaz à combustion rapprochée selon l'invention, incorporant une pièce poreuse annulaire,
- la figure 2 est une coupe dans un plan radial selon la ligne II-II de la figure 1,
- la figure 3 est une vue de détail montrant un exemple de réalisation de la pièce poreuse incorporé dans le générateur de gaz selon l'invention,
- la figure 4 est une vue de détail en coupe selon un plan axial montrant un exemple de réalisation possible de moyens d'injection en nappe d'un ergol dans la chambre de combustion d'un générateur de gaz selon l'invention,
- la figure 5 est une vue de détail en coupe selon un plan radial montrant un exemple de réalisation possible de moyens d'injection d'un ergol à l'intérieur de la pièce poreuse incorporée dans le générateur de gaz selon l'invention,
- la figure 6 est une vue en coupe selon un plan radial, d'un second exemple de générateur de gaz selon l'invention, selon lequel deux ergols différents sont injectés dans la pièce poreuse incorporée dans le générateur de gaz,
- la figure 7 est une vue en coupe axiale partielle selon la ligne VII-VII de la figure 6,
- la figure 8 est une vue en coupe selon un plan radial, d'encore un autre exemple de générateur de gaz selon l'invention, selon lequel deux ergols différents sont injectés dans la pièce poreuse incorporée dans le générateur de gaz,
- la figure 9 est une vue en coupe longitudinale partielle selon la ligne IX-IX de la figure 8,
- la figure 10 est une vue schématique en élévation montrant un exemple de forme possible pour le générateur de gaz selon l'invention, et
- la figure 11 est une vue en coupe selon un plan radial, d'un exemple de générateur de gaz selon l'invention avec une chambre de combustion centrale.

### Description détaillée de modes particuliers de réalisation

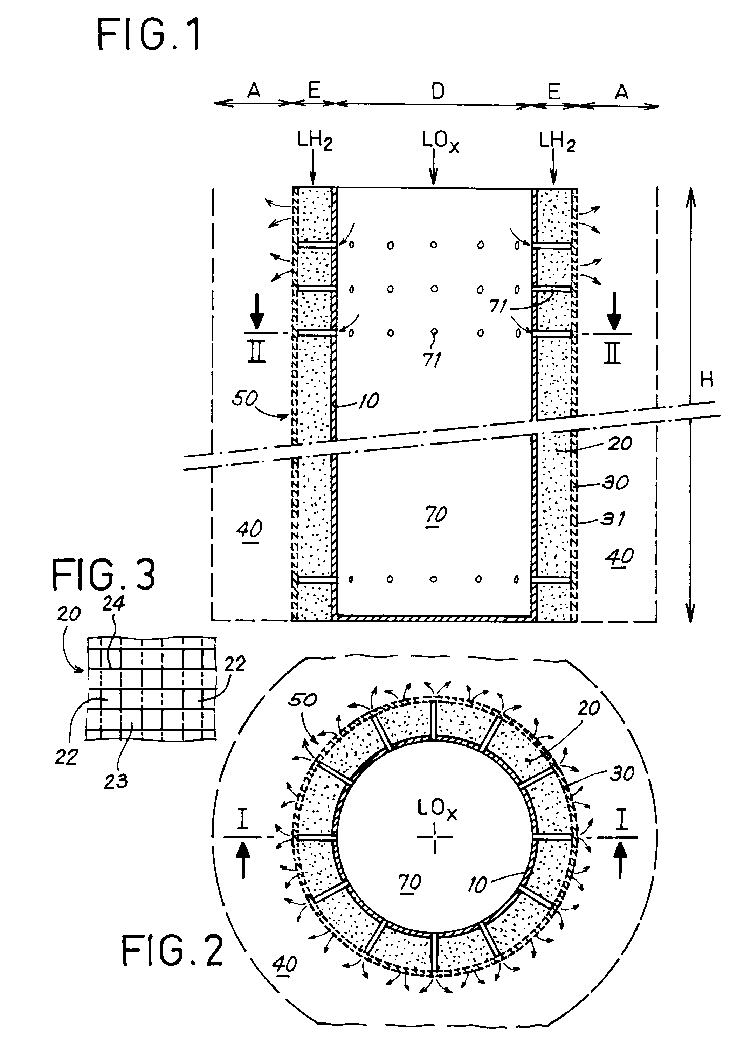

Si l'on se réfère aux figures 1 et 2, on voit le schéma d'ensemble d'un exemple de générateur de gaz 50 à combustion rapprochée conforme à l'invention, qui permet de délivrer de façon radiale des gaz dans un espace annulaire extérieur 40 de largeur A réduite.

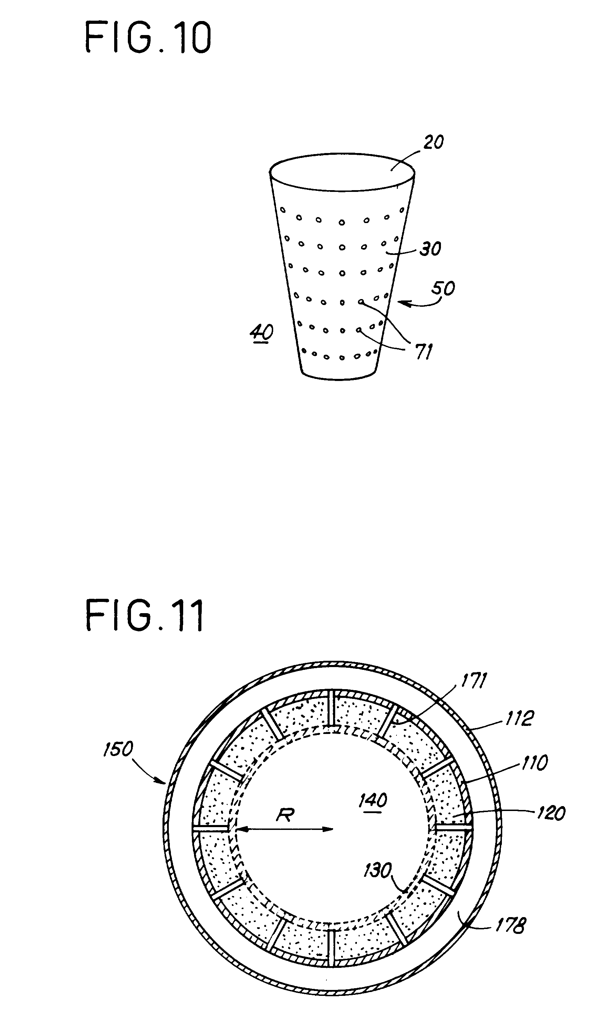

L'essentiel de la description s'effectuera en référence à un générateur de gaz présentant une chambre de combustion annulaire externe 40, mais l'invention s'applique également à un générateur de gaz 150 comportant une chambre de combustion centrale 140, comme cela sera décrit plus loin en référence à la fig. 11.

Le générateur de gaz selon l'invention est essentiellement conçu pour réaliser une combustion très rapide d'un premier et d'un deuxième ergols liquides qui peuvent être constitués respectivement par exemple par un combustible tel que de l'hydrogène liquide et un comburant tel que de l'oxygène liquide.

Le générateur de gaz 50 comprend essentiellement une pièce poreuse principale annulaire 20 qui peut être de forme cylindrique (fig 1) ou encore tronconique (fig.10).

La pièce poreuse 20 permet d'éviter l'utilisation d'injecteurs individuels conventionnels dont la longueur est importante et autorise l'application de débits significatifs d'ergols dans la chambre de combustion 40, au moins l'un des ergols étant injecté par transpiration à travers la pièce poreuse 20 qui définit une paroi d'épaisseur E limitée introduisant des pertes de charge très réduites. La pièce poreuse 20 est munie d'au moins une garniture de calibrage qui assure le calibrage du débit d'ergol traversant cette pièce et contribue à stabiliser la combustion.

La pièce poreuse 20 peut être réalisée de différentes façons et peut présenter par exemple une porosité de 20 à 40 %.

Selon un mode particulier de réalisation possible, la pièce poreuse 20 est réalisée à partir de billes de métal comprimées par compression isostatique à chaud.

Selon un autre mode particulier de réalisation, la pièce poreuse 20 est réalisée en matériau composite à matrice céramique ou carbone.

La figure 3 montre, vue de l'extérieur, une portion d'une pièce poreuse 20 qui est formée d'un ensemble de nappes de bandes entrelacées 22, 23, qui peuvent être assemblées par tissage. Dans ce cas, il est possible d'éviter l'utilisation d'une garniture de calibrage séparée, celle-ci pouvant être réalisée par colmatage de certains des orifices 24 formés aux intersections des bandes entrelacées 22, 23 sur les surfaces externes de la pièce poreuse 20.

Si l'on considère à nouveau les figures 1 et 2, on voit un générateur de gaz 50 cylindrique présentant une hauteur H et une cavité centrale 70 de diamètre D pouvant servir à l'alimentation par exemple du deuxième ergol qui peut être injecté à partir de cette cavité centrale 70 directement dans la chambre de combustion périphérique 40 tandis que le premier ergol est injecté à travers la pièce poreuse 20 munie d'une garniture de calibrage.

Dans le cas des figures 1 et 2 on a représenté une structure de renfort cylindrique 10 par exemple métallique, qui délimite la cavité centrale 70 et se trouve plaquée contre la face de la pièce poreuse 20 qui est opposée à la face délimitant la chambre de combustion 40.

Une pluralité de pitots radiaux 71 traversent de part en part la structure de renfort cylindrique 10, la pièce poreuse 20 et la garniture de calibrage 30 placée sur la face de la pièce poreuse 20 délimitant la chambre de combustion 40. Les pitots 71 sont répartis sur tout le pourtour du générateur de gaz 50 et sur toute la hauteur de celui-ci.

Lors de la fabrication du générateur, il est possible de réaliser d'abord la structure de renfort cylindrique 10, puis de fixer les pitots 71 sur cette structure de renfort 10 de manière à constituer une structure de type "hérisson", puis de former la pièce poreuse 20 et la garniture 30 avec ses orifices de calibrage 31 sur la structure de renfort 10 dans les espaces libres entre les pitots 71.

Selon un autre procédé de fabrication possible, on forme d'abord la pièce poreuse 20, la garniture de calibrage 30 et la structure de renfort 10, ces dernières pouvant être formées par dépôt sur les faces externe et interne de la pièce poreuse 20, ou la structure de renfort 10 pouvant être formée en premier et, après avoir effectué des perçages radiaux à travers la paroi complexe formée de la structure de renfort 10, de la pièce poreuse 20 et de la garniture de calibrage 30, on introduit les pitots 71 dans les perçages radiaux formés et on fixe ces pitots 71 sur la structure de renfort 10, par exemple par brasage, sertissage ou vissage. Ce procédé, selon lequel des perçages radiaux sont effectués et les pitots sont mis en place sur un ensemble monobloc permet de ne pas avoir les problèmes de désalignement qui peuvent se produire lorsque des perçages radiaux sont effectués au préalable sur des pièces indépendantes. Les perçages radiaux à travers la paroi complexe sont réalisés génératrice après génératrice.

Dans le mode de réalisation des figures 1 et 2, l'un des ergols tels que par exemple de l'hydrogène liquide est injecté dans la pièce poreuse 20 à travers laquelle il migre vers la chambre de combustion annulaire externe 40 et débouche radialement sur toute la surface périphérique externe de la pièce poreuse 20 à travers les orifices 31 de la garniture de calibrage et de renfort 30. L'autre ergol, tel que de l'oxygène liquide, est introduit dans la cavité centrale 70 puis est injecté radialement à travers les pitots 71, directement dans la chambre de combustion 40 mais à proximité immédiate de la face externe de la pièce poreuse 20, de façon à provoquer un mélange des ergols à proximité immédiate de la pièce poreuse 20 et assurer une combustion rapprochée, permettant ainsi de conserver des dimensions relativement réduites pour l'ensemble du générateur de gaz 50.

De préférence, la pièce poreuse 20 dans laquelle migre le premier ergol présente une épaisseur E supérieure ou égale à 5 mm.

A titre d'exemple, la chambre de combustion 40 peut présenter dans le sens radial une largeur A comprise entre 20 et 50 mm.

L'invention permet de réaliser facilement un générateur de gaz présentant une hauteur H comprise entre 40 et 120 mm, avec une pièce poreuse 20 présentant un diamètre interne moyen D compris entre 60 et 100 mm.

Au contraire, un générateur de gaz de type classique équipé d'une plaque d'injection munie d'injecteurs coaxiaux doit, pour des performances équivalentes, présenter une hauteur supérieure à environ 200 mm et un diamètre supérieur ou égal à environ 180 mm.

Avec un encombrement dans le sens radial inférieur ou égal à celui d'un générateur de gaz traditionnel, un générateur de gaz selon l'invention permet de diviser la hauteur H par deux.

A titre d'exemple, pour un générateur de gaz 50 présentant une hauteur H de 100 mm, la vitesse d'éjection d'oxygène liquide à travers les pitots 71 peut être de l'ordre de 6 m/s si le nombre de pitots 71 est de l'ordre de 120 et si le diamètre interne de ces pitots est par exemple de 2,4 mm.

La vitesse de sortie d'un ergol combustible tel que de l'hydrogène liquide à travers la paroi poreuse 20 présentant une épaisseur de l'ordre de 5 mm, dépend de la surface débitante, et donc de la porosité du matériau. Pour une porosité de l'ordre de 40 % la vitesse de sortie de l'ergol liquide à travers la pièce poreuse 20 est de l'ordre de 5 m/s tandis que pour une porosité de l'ordre de 20 %, la vitesse de sortie de l'ergol liquide est de l'ordre de 10 m/s. Ceci conduit à des zones de mélange et de combustion des ergols s'étendant sur 50 à 100 mm. On peut ainsi obtenir une flamme sur une très courte distance.

Pour tenir compte de l'extension de la zone de combustion à la fois dans le sens radial et dans le sens axial, il peut être avantageux, pour certaines applications, de réaliser la pièce poreuse 20 sous une forme tronconique, comme représenté sur la figure 10, avec une section plus réduite dans une partie aval comportant un plus petit nombre de pitots 71 et une chambre de combustion 40 pouvant elle-même être plus large dans la partie aval, la zone externe de production de gaz chauds pouvant elle-même être à peu près cylindrique.

D'une manière générale, le fait que les ergols injectés à travers la pièce poreuse 20 peuvent, avec des débits significatifs, être injectés dans la chambre de combustion 40 avec des vitesses débitantes de l'ordre de seulement quelques mètres par seconde, il est possible d'obtenir une flamme courte, c'est-à-dire une combustion rapprochée de la pièce poreuse 20, qui permet la réalisation d'un générateur de gaz compact.

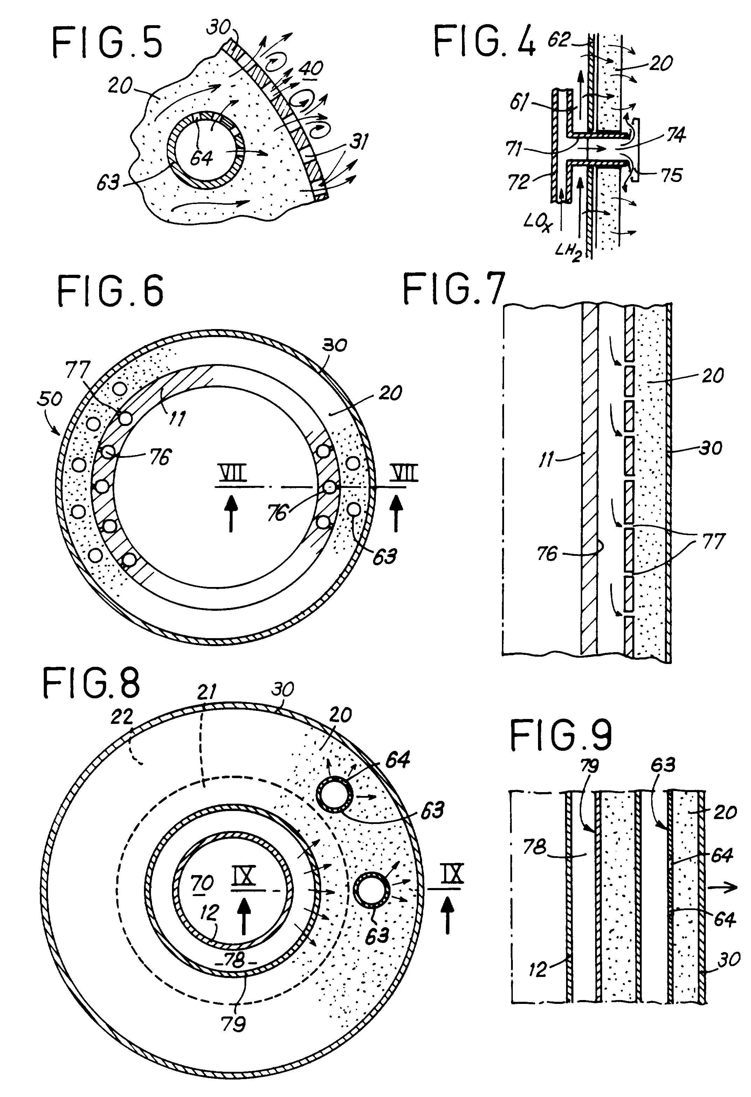

De nombreuses variantes de réalisation sont possibles. Ainsi, on a montré sur la figure 4 la mise en oeuvre d'inserts creux 74 qui sont disposés dans les pitots 71, en assurant le passage du deuxième ergol, et se prolongent à l'intérieur de la chambre de combustion 40 par des épanouissements 75 munis d'orifices tournés vers la pièce poreuse 20 pour orienter l'injection du deuxième ergol, tel que de l'oxygène liquide, sous la forme d'une nappe sensiblement parallèle à la pièce poreuse 20, de manière à réduire la distance de pénétration radiale de l'ergol injecté par les pitots 71 dans la chambre de combustion 40.

Les pitots 71 peuvent éventuellement présenter des formes diverses, autres que cylindriques et peuvent par exemple présenter une section rectangulaire ou autre.

Le premier ergol, tel que de l'hydrogène liquide peut être introduit de diverses manières dans la pièce poreuse 20.

Sur la figure 5, on a ainsi représenté un conduit longitudinal 63 pouvant s'étendre sur toute la hauteur de la pièce poreuse 20, qui est alimenté en ergol à son extrémité supérieure. Le conduit 63 est délimité au moins dans sa partie tournée vers la chambre de combustion 40 par une paroi munie d'orifices 64 formant une garniture de calibrage. Un ensemble de tels tubes longitudinaux 63 peuvent ainsi être répartis dans la pièce poreuse 20 de façon à permettre une migration du premier ergol vers la chambre de combustion 40 sur toute la périphérie et toute la hauteur de la pièce poreuse 20. La garniture de calibrage extérieure 30 sert dans ce cas essentiellement de renfort mécanique, mais ne joue qu'un rôle secondaire dans la définition du débit du premier ergol.

Les pitots 71 peuvent être alimentés en ergol à partir d'une chambre annulaire d'alimentation 72 disposée dans la cavité centrale 70 et s'étendant sur toute la hauteur de celle-ci, (Fig. 4), ou par une série de conduits d'alimentation s'étendant sur toute la hauteur du générateur de gaz. Les pitots 71 peuvent alors être constitués par de petits conduits de dérivation radiaux raccordés aux conduits d'alimentation ou à la chambre annulaire d'alimentation 72.

La chambre annulaire 72 peut être placée à une faible distance derrière la face interne de la pièce poreuse 20, à l'intérieur de la cavité centrale 70, de manière à ménager un espace annulaire 61 d'alimentation en premier ergol qui permet l'injection de cet ergol dans la pièce poreuse 20 à travers une garniture de calibrage 62 placée sur la face interne de la pièce poreuse 20 du côté opposé à la chambre de combustion 40. Le premier ergol peut aussi entre autres être injecté dans la pièce poreuse 20 par des conduits 63 incorporés dans cette pièce.

On a décrit jusqu'à présent des modes de réalisation dans lesquels le premier ergol est injecté à travers la pièce poreuse 20 tandis que le second ergol traverse la pièce poreuse 20 dans des pitots 71 ou similaire pour être injecté séparément dans la chambre de combustion 40, le mélange des ergols s'opérant au voisinage de la pièce poreuse 20, mais à l'intérieur de la chambre de combustion 40.

L'invention concerne toutefois également des modes de réalisation dans lesquels le mélange des ergols s'effectue dans la pièce poreuse 20 elle-même, avant même l'injection dans la chambre de combustion 40. Ceci contribue à homogénéiser le mélange des ergols.

Selon un mode particulier de réalisation illustré sur les figures 6 et 7, le second ergol, par exemple le comburant, arrive dans la partie la plus interne du générateur de gaz et est canalisé par un ensemble de tubes 76 formés dans une couronne massive 11, qui peut être métallique. Des orifices 77 sont formés le long des tubes 76 qui sont pour l'essentiel orientés dans le sens longitudinal du générateur. Les orifices 77 sont réalisés dans la partie des tubes 76 orientée vers la pièce poreuse 20 de manière à permettre au second ergol de s'écouler vers la périphérie du générateur à travers la pièce poreuse 20. Le premier ergol, par exemple le combustible, est lui-même injecté dans la pièce poreuse 20 par exemple par des tubes 63 qui sont orientés pour l'essentiel également dans le sens longitudinal du générateur, et présentent au moins dans leur partie tournée vers la chambre de combustion 40 une garniture de calibrage percée d'orifices 64 assurant le passage de l'ergol dans la pièce poreuse 20 sur toute la hauteur de cette pièce poreuse 20. Les tubes 63 peuvent ainsi être réalisés de la façon décrite en référence à la figure 5. Une garniture de calibrage 30 est avantageusement disposée sur la face externe de la pièce poreuse 20 délimitant la chambre de combustion 40 de manière à améliorer la tenue mécanique de la pièce poreuse 20 traversée par les tubes 63 tout en contribuant également à moduler la vitesse d'injection des ergols et à assurer des zones de recirculation, près de la paroi de la chambre de combustion.

Les figures 8 et 9 montrent un autre mode de réalisation selon lequel les ergols sont mélangés dans la pièce poreuse 20. Selon ce mode particulier de réalisation, une cavité annulaire 78, qui est située du côté opposé à la chambre de combustion 40, dans la cavité centrale 70, s'étend sur toute la hauteur du générateur et se trouve limitée d'une part de façon interne par une paroi pleine 12 et d'autre part, par une garniture de calibrage 79 du côté de la cavité annulaire 78 qui est en contact avec la pièce poreuse annulaire 20 de manière à permettre l'injection du deuxième ergol directement dans la pièce poreuse 20. Le premier ergol peut lui-même être introduit dans la pièce poreuse 20 par des tubes longitudinaux 63 munis sur une partie de leur pourtour, d'une garniture de calibrage percée de trous 64 comme décrit précédemment en référence aux figures 5 et 6. Une garniture de calibrage extérieure 30 entoure la pièce poreuse 20 comme dans le cas de la figure 5 par exemple.

Selon une variante de réalisation, le deuxième ergol pourrait être introduit dans la pièce poreuse 20 au moyen d'une série de tubes longitudinaux analogues aux tubes 63 et disposés dans la pièce poreuse 20 au voisinage des tubes 63, mais de façon un peu plus interne et possédant des ouvertures orientées dans toutes les directions. La pièce poreuse 20 peut encore être constituée par deux couronnes concentriques juxtaposées 21, 22 désignées en pointillés sur la figure 8. Dans ce cas, la couronne de matériau poreux 21 la plus interne est traversée par un seul des ergols, par exemple le comburant, tandis que l'autre ergol, tel que le combustible, est injecté dans la couronne de matériau poreux 22 la plus externe où s'effectue un mélange homogène des deux ergols qui traverse la couronne externe 22 pour déboucher radialement dans la chambre de combustion 40. Le mélange des ergols est stable pour des conditions définies de pression et de température et pour la durée de passage du mélange dans la pièce poreuse 20.

On a décrit ci-avant divers modes de réalisation d'un générateur de gaz 50 comportant une chambre de combustion 40 annulaire externe. Les divers modes de réalisation décrits peuvent cependant être adaptés à des générateurs de gaz comportant une chambre de combustion centrale, les ergols étant injectés radialement de l'extérieur vers l'intérieur à travers la pièce poreuse annulaire qui joue exactement le même rôle que dans le cas d'un générateur à chambre de combustion externe.

On a représenté sur la figure 11 un tel exemple de générateur de gaz 150 à combustion rapprochée comprenant une chambre de combustion centrale 140 dont le rayon R peut être par exemple compris entre 20 et 50 mm, pour une hauteur de générateur qui peut être comprise par exemple entre 50 et 100 mm.

Une enceinte annulaire externe 178 est délimitée par une paroi cylindrique externe continue 112 et par une paroi cylindrique interne continue 110 à l'exception d'orifices de passage radiaux traversés par des pitots 171. Un ergol comburant tel que de l'oxygène liquide est introduit dans la cavité annulaire externe 178 pour être injecté radialement à travers les pitots 171, qui peuvent être tout-à-fait semblables aux pitots 71 précédemment décrits, dans la chambre de combustion centrale 140. L'ergol combustible peut être introduit dans la pièce poreuse annulaire 120 qui est disposée en sandwich entre la paroi cylindrique 110 et une garniture de calibrage 130 qui peut elle-même être tout-à-fait semblable à la garniture de calibrage et de renfort 30 précédemment décrite. Dans l'exemple de la figure 11, les ergols se mélangent dans la chambre de combustion centrale 140, au voisinage de la garniture de calibrage 130 de façon analogue au mode de réalisation des figures 1 et 2. Toutefois, le mode de réalisation avec chambre de combustion centrale 140 peut aussi être mis en oeuvre avec un mélange des ergols dans la pièce poreuse 120, d'une façon analogue à ce qui a été décrit en référence aux figures 6, 7 et 8, 9.

On notera que les divers modes de réalisation précédemment décrits présentent une simplicité de réalisation, par le caractère monobloc des pièces constitutives. Ainsi, la pièce poreuse annulaire 20, 120 est unique ou au plus constituée de deux couronnes concentriques monoblocs 21, 22 (fig 8). Les enveloppes de calibrage 30, 130, 79, 62, 63 présentent des formes tubulaires simples à réaliser. De même, les moyens d'alimentation en ergols 71, 72, 76, 171 se présentent essentiellement sous une forme tubulaire.

La structure même du générateur de gaz selon l'invention se prête à une réalisation par emboîtages successifs des diverses pièces, ce qui facilite le montage et permet d'augmenter la reproductibilité tout en réduisant les coûts et augmentant la précision du résultat obtenu. Le montage par emboîtages successifs permet notamment de tester chaque pièce au cours du montage et d'adapter le cas échéant les pièces ultérieures. Il permet aussi de prévoir à l'avance l'appariement de certaines pièces pour rationaliser la production et accroître la reproductibilité.

Les perçages devant être effectués dans la pièce poreuse 20 ou 120 peuvent être réalisés par la technique de l'électro-érosion. Les perçages qui se situent parallèlement à l'axe de révolution du générateur peuvent être effectués simultanément (cas des figures 5, 6, 8). Les perçages radiaux peuvent être effectués successivement génératrice après génératrice (cas des figures 1, 2, 4, 11).

Les orifices 64, 76 formés dans des pièces métalliques peuvent être réalisés par des techniques habituelles de perçage à l'aide de forets.

Dans le cas du mode de réalisation des figures 1 et 2, les tubes radiaux 71 sont insérés après perçage de la pièce poreuse 20 préalablement équipée de ses enveloppes de renfort et de calibrage 10, 30. On garantit ainsi un bon alignement des trous radiaux formés dans les trois pièces 10, 20, 30.

Pour les modes de réalisation tels que ceux des figures 5, 6 et 8, on peut avoir intérêt à placer d'abord sur les faces externe et interne de la pièce poreuse 20 les enveloppes extérieure 30 et intérieure 79, 11, puis à insérer les tubes 63 dans des trous formés au préalable parallèlement à l'axe de révolution du générateur de gaz. Un exemple de procédé de mise en place des tubes 63 est le suivant : on porte la pièce poreuse 20, munie de ses trous parallèles à son axe de révolution, à une température élevée, par exemple 300°C à 400°C. Ce chauffage peut être réalisé par immersion de la pièce poreuse 20 dans un bain d'huile, ou par chauffage par courants de Foucault en utilisant des champs magnétiques variables. Les tubes 63 à insérer dans la pièce poreuse 20 sont eux-mêmes portés à basse température puis introduits dans les trous formés dans la pièce poreuse 20. Après mise en place des tubes 63, lorsque la pièce poreuse 20 est revenue à température ambiante, les tubes sont maintenus en place de façon rigide à l'intérieur de cette pièce 20 et peuvent présenter un bon comportement même en présence de sources externes de vibration.

Les tubes d'alimentation en ergols tels que les tubes 63 peuvent être alimentés de façon simple à partir d'un collecteur torique traversé par les extrémités des tubes 63. L'étanchéité au niveau des points de contact entre les tubes 63 et un tel collecteur torique peut être réalisée par exemple par des brasures.

Sur le plan fonctionnel, on peut noter que dans un mélange homogène tel que celui que l'on cherche à réaliser dans le cadre de la présente invention avec les ergols en les injectant dans le matériau poreux ou à sa proximité immédiate, la combustion se propage à une vitesse constante délimitant le domaine des ergols non brûlés ("gaz"frais) et le domaine des gaz brûlés. Le front de flamme qui délimite les deux domaines précités se déplace vis-à-vis des gaz frais à une vitesse qui dépend de la nature de ces gaz frais, ainsi que des conditions de température, pression, rapport de mélange, titre des réactifs.

Si la vitesse d'avancée des gaz frais excède celle du front de flamme, la flamme se déplace en direction du domaine des gaz brûlés et peut quitter la chambre de combustion. Dans ce cas, il y a extinction de la combustion dans la chambre du moteur-fusée, et il n'y a plus de propulsion possible.

L'invention vise à diminuer considérablement la sensibilité vis-à-vis de l'extinction.

Le mélange d'ergols utilisé, en particulier le couple oxygène liquide-hydrogène liquide, possède la propriété d'avoir une vitesse de combustion très élevée, de sorte que la flamme cherche toujours à coller à la paroi débitant les ergols, et s'accroche au mélange diphasique créé à peu de distance de la paroi par l'association de gaz et de gouttelettes en processus de vaporisation et de combustion.

La fraction liquide, constituée d'oxygène liquide avec de l'hydrogène intimement mélangé, apparaît sous forme d'un nuage de gouttelettes qui, à la traversée de la flamme adjacente à la paroi, s'entoure d'une flamme.

La vitesse de propagation de la flamme dépend de la température du mélange gazeux, ainsi que de la pression et du rapport de mélange. La flamme créée doit rester à très peu de distance de la paroi sans coller effectivement à celle-ci.

L'existence d'une garniture de calibrage 30, 130 située du côté de la chambre de combustion est essentielle dans la mesure où, outre sa fonction d'accroissement de la tenue mécanique du matériau poreux, cette garniture de calibrage permet de :
- moduler la vitesse d'injection,
- assurer des zones de recirculation près de la paroi propres à maintenir la combustion,

On comprendra qu'en restreignant les ouvertures en sortie de la pièce poreuse par les orifices de calibrage 31, et à débit imposé, on augmente la vitesse d'éjection des ergols, c'est-à-dire on éloigne la flamme (et on en modifie sa forme). Ceci permet donc de constituer un second moyen de contrôle de la position de la flamme, le premier moyen de contrôle étant constitué par la température d'injection des ergols.

Par ailleurs, la présence d'une garniture de calibrage 30 garantit que, dans l'intervalle séparant deux jets adjacents à travers des orifices 31 se crée une zone de recirculation de gaz chauds, qui entretient la combustion et assure un accrochage de la flamme (voir fig. 5).

La stabilité de la combustion est assurée par un choix particulier à chaque niveau du générateur de gaz, de la taille des orifices de calibrage 31, de la distance entre les orifices de calibrage voisins 31 et de la densité de ces orifices (nombre d'orifices par unité de surface). Ces paramètres sont donc variables selon la distance considérée en hauteur par rapport à une extrémité du générateur de gaz constituant la tête du générateur.

A titre d'exemple, la présence d'une flamme dans le générateur de gaz peut être garantie par la création d'une flamme pilote en tête du générateur, cette flamme pilote communiquant la combustion au reste de la chambre du générateur. La flamme pilote est créée grâce à des débits d'ergols très faibles au niveau de la tête du générateur. Il existe ainsi continuellement, en amont de l'écoulement, une source de gaz chauds qui propage la combustion lorsque ces gaz chauds se déplacent dans la chambre de combustion.

## Revendications

1. Générateur de gaz à combustion rapprochée, comprenant des moyens d'alimentation en un premier ergol liquide et des moyens d'alimentation en un deuxième ergol liquide, une pièce poreuse principale (20;120), à travers laquelle un débit de circulation du premier ergol liquide est injecté vers une chambre de combustion (40;140) délimitée par l'une des faces de la pièce poreuse (20;120) et des moyens (71;76;78;171) pour injecter un débit du deuxième ergol dans la pièce poreuse ou à proximité immédiate de la face de la pièce poreuse (20;120) délimitant la chambre de combustion (40;140) de manière à provoquer un mélange des premier et deuxième ergols dans la pièce poreuse ou à proximité immédiate de ladite face de la pièce poreuse (20;120) délimitant la chambre de combustion (40;140), caractérisé en ce que la pièce poreuse principale (20; 120) présente une forme annulaire, en ce que lesdits moyens (71; 76; 78; 171) pour injecter un débit du deuxième ergol sont conformés de manière à provoquer une injection du deuxième ergol qui est essentiellement radiale, en ce qu'au moins une garniture de calibrage (30; 62; 63; 130) est associée à la pièce poreuse principale (20; 120) et en ce que la garniture de calibrage (30; 62; 63; 130) comprend des orifices de calibrage (31, 64) assurant une modulation de la vitesse d'injection du premier ergol liquide dans la chambre de combustion (40; 140), au moins l'un des paramètres constitués par ladimension des orifices de calibrage, la distance entre les orifices de calibrage voisins et le nombre d'orifices de calibrage par unité de surface étant variable en fonction de la position axiale des orifices de calibrage (31, 64) dans la garniture de calibrage (30; 62; 63; 130).

2. Générateur de gaz selon la revendication 1, caractérisé en ce qu'il comprend une garniture de calibrage (30; 130) placée sur la face de la pièce poreuse (20;120) qui est située du côté de la chambre de combustion (40; 140).

3. Générateur de gaz selon la revendication 2, caractérisé en ce que dans la zone d'extrémité de la garniture de calibrage (30; 130) constituant la tête du générateur, les orifices de calibrage (31) sont déterminés de manière à définir de faibles débits d'ergol créant une flamme pilote.

4. Générateur de gaz selon l'une quelconque des revendications 1 à 3, caractérisé en ce que les moyens (71; 171) pour injecter radialement un débit du deuxième ergol débouchent dans la chambre de combustion (40; 140) à l'extérieur de la pièce poreuse (20; 120).

5. Générateur de gaz selon la revendication 4, caractérisé en ce que les moyens pour injecter radialement un débit du deuxième ergol comprennent une pluralité de pitots radiaux (71; 171) qui traversent la pièce poreuse (20; 120) de part en part et sont répartis sur toute la hauteur et toute la périphérie du générateur.

6. Générateur de gaz selon la revendication 5, caractérisé en ce que les pitots (71; 171) sont rattachés à une structure de renfort (10; 110) plaquée contre la pièce poreuse (20; 120) sur la face opposée à la face délimitant la chambre de combustion (40; 140).

7. Générateur de gaz selon la revendication 5 ou la revendication 6, caractérisé en ce que les pitots radiaux (71; 171) sont alimentés à partir d'une chambre annulaire d'alimentation (78; 178) s'étendant sur toute la hauteur du générateur.

8. Générateur de gaz selon la revendication 5 ou la revendication 6, caractérisé en ce que les pitots radiaux (71) sont alimentés à partir d'une pluralité de conduits d'alimentation s'étendant sur toute la hauteur du générateur.

9. Générateur de gaz selon l'une quelconque des revendications 5 à 8, caractérisé en ce que des inserts (74) sont montés dans les pitots radiaux (71; 171) et se prolongent par des épanouissements (75) à l'intérieur de la chambre de combustion (40; 140) de manière à produire une injection du deuxième ergol sous la forme d'une nappe sensiblement parallèle à la pièce poreuse (20; 120).

10. Générateur de gaz selon la revendication 1, caractérisé en ce que les moyens (76; 78) pour injecter radialement un débit du deuxième ergol débouchent dans la pièce poreuse (20; 120).

11. Générateur de gaz selon la revendication 10, caractérisé en ce que les moyens pour injecter radialement un débit du deuxième ergol comprennent une cavité annulaire (78) qui est située du côté de la pièce poreuse (20) opposé à la chambre de combustion (40), s'étend sur toute la hauteur du générateur et se trouve limitée par une garniture de calibrage (79) du côté qui est en contact avec la pièce poreuse (20) de manière à permettre l'injection du deuxième ergol directement dans la pièce poreuse (20).

12. Générateur de gaz selon la revendication 10, caractérisé en ce que les moyens pour injecter radialement un débit du deuxième ergol comprennent des passages longitudinaux (76) formés dans une pièce massive (11), qui s'étendent le long de la pièce poreuse (20) du côté opposé à la chambre de combustion (40) sur toute la hauteur du générateur et débouchent dans la pièce poreuse (20) par des passages radiaux calibrés.

13. Générateur de gaz selon l'une quelconque des revendications 1 à 12, caractérisé en ce qu'il comprend une garniture de calibrage (62; 79) placée sur la face de la pièce poreuse (20) qui est située du côté opposé à la chambre de combustion (40).

14. Générateur selon l'une quelconque des revendications 1 à 13, caractérisé en ce que le premier ergol est injecté dans la pièce poreuse (20) par des conduits longitudinaux (63) délimités au moins dans leur partie tournée vers la chambre de combustion (40) par une garniture de calibrage (64).

15. Générateur selon l'une quelconque des revendications 1 à 14, caractérisé en ce que la pièce poreuse (20; 120) est formée d'un ensemble de nappes de bandes entrelacées (22, 23) et en ce qu'une garniture de calibrage est réalisée par colmatage de certains des orifices (24) formés aux intersections des bandes entrelacées (22, 23).

16. Générateur de gaz selon l'une quelconque des revendications 1 à 15, caractérisé en ce que la pièce poreuse (20; 120) est réalisée en matériau composite à matrice céramique ou carbone.

17. Générateur de gaz selon l'une quelconque des revendications 1 à 14, caractérisé en ce que la pièce poreuse (20; 120) est réalisée à partir de billes de métal comprimées par compression isostatique à chaud.

18. Générateur de gaz selon l'une quelconque des revendications 1 à 17, caractérisé en ce que la pièce poreuse (20; 120) présente essentiellement une forme cylindrique.

19. Générateur de gaz selon l'une quelconque des revendications 1 à 17, caractérisé en ce que la pièce poreuse (20; 120) présente essentiellement une forme tronconique.

20. Générateur de gaz selon l'une quelconque des revendications 1 à 19, caractérisé en ce qu'il comprend une chambre de combustion annulaire extérieure (40).

21. Générateur de gaz selon l'une quelconque des revendications 1 à 19, caractérisé en ce qu'il comprend une chambre de combustion centrale (140).

22. Générateur de gaz selon l'une quelconque des revendications 1 à 21, caractérisé en ce que la pièce poreuse (20; 120) dans laquelle migre au moins le premier ergol présente une épaisseur (E) supérieure ou égale à 5 mm.

23. Générateur de gaz selon l'une quelconque des revendications 1 à 22, caractérisé en ce qu'il présente une hauteur (H) comprise entre 40 et 120 mm.

24. Générateur de gaz selon l'une quelconque des revendications 1 à 23, caractérisé en ce que la pièce poreuse (20; 120) présente un diamètre interne moyen (D) compris entre 60 et 100 mm.

25. Générateur de gaz selon l'une quelconque des revendications 1 à 24, caractérisé en ce que la chambre de combustion (40; 140) présente dans le sens radial une largeur (A,R) comprise entre 20 et 50 mm.

26. Générateur de gaz selon l'une quelconque des revendications 1 à 25, caractérisé en ce que le premier ergol est constitué par de l'hydrogène liquide et le deuxième ergol est constitué par de l'oxygène liquide.

## Claims

1. A close combustion gas generator comprising means for feeding a first liquid propellant component and means for feeding a second liquid propellant component, a main porous piece (20;120) through which a flow of the first liquid propellant component is injected towards a combustion chamber (40;140) delimited by one of the faces of the porous piece (20;120) and means (71;76;78;171) for injecting a flow of the second propellant component into the porous piece or the immediate proximity of the face of the porous piece (20;120) that delimits the combustion chamber (40;140) in such a manner as to cause the first and second propellant components to mix in the porous piece (20;120) or the immediate proximity of said face of the porous piece (20;120) that delimits the combustion chamber (40;140), characterized in that the main porous piece (20;120) is annular in shape, in that said means (71; 76; 78; 171) for injecting a flow of the second propellant component are shaped so as to cause the second fuel component to be injected essentially radially, in that at least one calibration lining (30; 62; 63; 130) is associated with the main porous piece (20; 120) and in that the calibration lining (30; 62; 63; 130) comprises calibration orifices (31, 64) for modulating the injection speed of the first liquid propellant component into the combustion chamber (40; 140), at least one of the parameters comprising the size of the calibration orifices, the distance between adjacent calibration orifices and the number of calibration orifices per unit area varying as a function of the axial position of the calibration orifices (31, 64) in the calibration lining (30; 62; 63; 130).

2. Gas generator according to claim 1, characterized in that it comprises a calibration lining (30 ; 130) placed on that face of the porous piece (20 ; 120) that is situated on the same side as the combustion chamber (40 ; 140).

3. Gas generator according to claim 2, characterized in that at the end zone of the calibration lining (30 ; 130) constituting the head of the generator, the calibration orifices (31) are designed so as to define small propellant component flow rates to create a pilot flame.

4. Gas generator according to any one of claims 1 to 3, characterized in that the means (71 ; 171) for radially injecting a flow of the second propellant component open out into the combustion chamber (40 ; 140) on the outside of the porous piece.

5. Gas generator according to claim 4, characterized in that the means for radially injecting a flow of the second propellant component comprise a plurality of radial tubes (71 ; 171) passing right through the porous piece (20 ; 120) and distributed over the entire height and the entire periphery of the generator.

6. Gas generator according to claim 5, characterized in that the tubes (71 ; 171) are attached to a reinforcing structure (10 ; 110) pressed against the face of the porous piece (20 ; 120) opposite from its face delimiting the combustion chamber (40 ; 140).

7. Gas generator according to claim 5 or claim 6, characterized in that the radial tubes (71 ; 171) are fed from an annular feed chamber (78 ; 178) extending up the entire height of the generator.

8. Gas generator according to claim 5 or claim 6, characterized in that the radial tubes (71) are fed from a plurality of feed ducts extending up the entire height of the generator.

9. Gas generator according to any one of claims 5 to 8, characterized in that the inserts (74) are mounted on the radial tubes (71 ; 171) and are extended by flared portions (75) inside the combustion chamber (40 ; 140) in such a manner as to cause the second propellant component to be injected in the form of a sheet that is substantially parallel to the porous piece (20 ; 120).

10. Gas generator according to claim 1, characterized in that the means (76 ; 78) for radially injecting a flow of the second propellant component open out into the porous piece (20 ; 120).

11. Gas generator according to claim 10, characterized in that the means for radially injecting a flow of the second propellant component comprise an annular cavity (78) which is situated on the side of the porous piece (20) opposite from its side delimiting the combustion chamber (40) extending up the entire height of the generator and defined on its side that is in contact with the porous piece (20) by means of a calibration lining (79) enabling the second propellant component to be injected directly into the porous piece (20).

12. Gas generator according to claim 10, characterized in that the means for radially injecting a flow of the second propellant component comprise longitudinal passages (76) formed in a solid part (11) that extend along the side of the porous piece (20) opposite from its side delimiting the combustion chamber (40) and up the entire height of the generator and that open out into the porous piece (20) via calibrated radial passages.

13. Gas generator according to any one of claims 1 to 12, characterized in that it comprises a calibration lining (62; 79) placed on the face of the porous piece (20) opposite from its face delimiting the combustion chamber.

14. Gas generator according to any one of claims 1 to 13, characterized in that the first propellant component is injected into the porous piece (20) via longitudinal ducts (63) each delimited, at least in its portion facing towards the combustion chamber (40), by a calibration lining (64).

15. Gas generator according to any one of claims 1 to 14, characterized in that the porous piece (20; 120) is made up of a set of sheets of interlaced strips (22, 23) and in that a calibration lining is implemented by plugging some of the orifices (24) formed at the intersections between the interlaced strips (22, 23).

16. Gas generator according to any one of claims 1 to 15, characterized in that the porous piece (20; 120) is made of a composite material having a carbon or a ceramic matrix.

17. Gas generator according to any one of claims 1 to 14, characterized in that the porous piece (20; 120) is made from metal balls that are compressed by hot isostatic compression.

18. Gas generator according to any one of claims 1 to 17, characterized in that the porous piece (20; 120) is essentially cylindrical in shape.

19. Gas generator according to any one of claims 1 to 17, characterized in that the porous piece (20; 120) is essentially frustoconical in shape.

20. Gas generator according to any one of claims 1 to 19, characterized in that it comprises an external annular combustion chamber (40).

21. Gas generator according to any one of claims 1 to 19, characterized in that it comprises a central combustion chamber (140).

22. Gas generator according to any one of claims 1 to 21, characterized in that the porous piece (20; 120) through which at least the first propellant component migrates has a thickness (E) that is not less than 5 mm.

23. Gas generator according to any one of claims 1 to 22, characterized in that the height thereof lies in the range 40 mm to 120 mm.

24. Gas generator according to any one of claims 1 to 23, characterized in that the porous piece (20; 120) has a mean inside diameter (D) lying in the range 60 mm to 100 mm.

25. Gas generator according to any one of claims 1 to 24, characterized in that the combustion chamber (40; 140) has a width (A, R) in the radial direction that lies in the range 20 mm to 50 mm.

26. Gas generator according to any one of claims 1 to 25, characterized in that the first propellant component is constituted by liquid hydrogen and the second propellant component is constituted by liquid oxygen.

## Patentansprüche

1. Nahverbrennungsgenerator, der Versorgungsvorrichtungen für einen ersten Flüssigtreibstoff und Versorgungsvorrichtungen für einen zweiten Flüssigtreibstoff, ein poröses Hauptteil (20; 120), über welches eine Durchflußmenge des ersten Flüssigtreibstoffes in eine Verbrennungskammer (40; 140) eingespritzt wird, die durch eine der Flächen des porösen Stückes (20; 120) begrenzt wird, und Vorrichtungen (71; 76; 78; 171) für das Einspritzen einer Menge des zweiten Treibstoffes in dem porösen Teil oder in unmittelbarer Nähe zur Fläche des porösen Teils (20; 120), die die Verbrennungskammer (40; 140) begrenzt, umfaßt, so daß eine Mischung aus erstem und zweitem Treibstoff in dem porösen Teil oder in unmittelbarer Nähe zu der besagten Fläche des porösen Teils (20; 120), die die Verbrennungskammer (40; 140) begrenzt, entsteht,
dadurch gekennzeichnet, daß
das poröse Hauptteil (20; 120) ringförmig ist, daß die besagten Vorrichtungen (71; 76; 78; 171) zum Einspritzen einer Menge des zweiten Treibstoffes so geformt sind, daß die Einspritzung des zweiten Treibstoffs im wesentlichen radial erfolgt,
daß wenigstens eine Kalibrierausrüstung (30; 62, 63; 130) für das poröse Hauptteil (20; 120) vorhanden ist und daß die Kalibrierausrüstung (30; 62, 63; 130) Kalibrieröffnungen (31; 64) zur Sicherstellung der Modulation der Einspritzgeschwindigkeit des ersten Flüssigtreibstoffs in die Verbrennungskammer (40; 140) umfaßt, wobei wenigstens einer der durch die Dimension der Kalibrieröffnungen gebildeten Parameter, nämlich Distanz zwischen den benachbarten Kalibrieröffnungen und Zahl der Kalibrieröffnungen pro Einheitsoberfläche, in Abhängigkeit von der axialen Position der Kalibrieröffnungen (31, 64) in der Kalibrierausrüstung (30; 62, 63; 130) veränderbar ist.

2. Gasgenerator nach Anspruch 1, dadurch gekennzeichnet, daß er eine Kalibrierausrüstung (30; 130) auf der Fläche des porösen Teils (20; 120) umfaßt, die sich auf der Seite der Verbrennungskammer (40; 140) befindet.

3. Gasgenerator nach Anspruch 2, dadurch gekennzeichnet, daß in dem Endbereich der Kalibrierausrüstung (30; 130) am Kopf des Generators die Kalibrieröffnungen (31) so angeordnet sind, daß kleine Mengen an Treibstoff abgetrennt werden, so daß sich eine Zündflamme bildet.

4. Gasgenerator nach einem der Ansprüche 1 bis 3, dadurch gekennzeichnet, daß die Vorrichtungen (71; 171) zum radialen Einspritzen einer Menge des zweiten Treibstoffs in die Verbrennungskammer (40; 140) aus dem porösen Teil (20; 120) heraustreten.

5. Gasgenerator nach Anspruch 4, dadurch gekennzeichnet, daß die Vorrichtungen zum radialen Einspritzen einer Menge des zweiten Treibstoffs mehrere radiale Pitot-Rohre (71; 171) umfassen, die das poröse Teil (20; 120) von einer Seite zur anderen durchqueren und die über die gesamte Höhe und den gesamten Umfang des Generators verteilt sind.

6. Gasgenerator nach Anspruch 5, dadurch gekennzeichnet, daß die Pitot-Rohre (71; 171) mit einer Verstärkungsstruktur (10; 110) verknüpft sind, die auf dem porösen Teil (20; 120) auf der Fläche aufgelegt ist, die der Fläche gegenüberliegt, die die Verbrennungskammer (40; 140) begrenzt.

7. Gasgenerator nach Anspruch 5 oder Anspruch 6, dadurch gekennzeichnet, daß die radialen Pitot-Rohre (71; 171) von einer ringförmigen Versorgungskammer (78; 178) gespeist werden, die sich über die gesamte Höhe des Generators erstreckt.

8. Gasgenerator nach Anspruch 5 oder Anspruch 6, dadurch gekennzeichnet, daß die radialen Pitot-Rohre (71) von einer Vielzahl von Versorgungsröhren gespeist werden, die sich über die gesamte Höhe des Generators erstrekken.

9. Gasgenerator nach einem der Ansprüche 5 bis 8, dadurch gekennzeichnet, daß die Einsätze (74) in den radialen Pitot-Rohren (71; 171) montiert sind und sich über Trichter (75) bis in das Innere der Verbrennungskammer (40; 140) ausdehnen, so daß der zweite Treibstoff in Form eines Vorhangs im wesentlichen parallel zum porösen Tel (20; 120) eingespritzt wird.

10. Gasgenerator nach Anspruch 1, dadurch gekennzeichnet, daß die Vorrichtungen (76; 78) zum radialen Einspritzen einer Menge des zweiten Treibstoffes in das poröse Teil (20; 120) münden.

11. Gasgenerator nach Anspruch 10, dadurch gekennzeichnet, daß die Vorrichtungen zum radialen Einspritzen einer Menge des zweiten Treibstoffs einen ringförmigen Hohlraum (78) auf einer Seite des porösen Teils (20) gegenüber der Verbrennungskammer (40) umfassen, der sich über die gesamte Höhe des Generators erstreckt und begrenzt wird durch eine Kalibrierausrüstung (79) auf der Seite, die den porösen Teil (20) berührt, so daß die Einspritzung des zweiten Treibstoffs direkt in das poröse Teil (20) möglich ist.

12. Gasgenerator nach Anspruch 10, dadurch gekennzeichnet, daß die Vorrichtungen zum radialen Einspritzen einer Menge des zweiten Treibstoffs Längspassagen (76) umfassen, die aus einem massiven Teil (11) herausgearbeitet wurden, die sich entlang des porösen Teils (20) auf der Seite gegenüber der Verbrennungskammer (40) über die gesamte Höhe des Generators erstrecken und in das poröse Teil (20) über kalibrierte radiale Passagen münden.

13. Gasgenerator nach einem der Ansprüche 1 bis 12, dadurch gekennzeichnet, daß er eine Kalibrierausrüstung (62; 79) umfaßt, die auf der Seite des porösen Teils (20) angeordnet ist, die sich auf der Seite gegenüber der Verbrennungskammer (40) befindet.

14. Generator nach einem der Ansprüche 1 bis 13, dadurch gekennzeichnet, daß der erste Treibstoff in das poröse Teil (20) über Längsleitungen (63) eingespritzt wird, die wenigstens in ihrem zur Verbrennungskammer (40) gerichteten Teil durch eine Kalibrierausrüstung (64) begrenzt sind.

15. Generator nach einem der Ansprüche 1 bis 14, dadurch gekennzeichnet, daß das poröse Teil (20; 120) aus einem Netzgebilde aus verflochtenen Bändern (22, 23) besteht und daß eine Kalibrierausrüstung realisiert wird durch Verstopfung von einigen der Öffnungen (24) an den Schnittstellen der verknüpften Bänder (22, 23).

16. Gasgenerator nach einem der Ansprüche 1 bis 15, dadurch gekennzeichnet, daß das poröse Teil (20; 120) aus Material besteht, das sich aus einer Keramik- oder Carbonmatrix zusammensetzt.

17. Gasgenerator nach einem der Ansprüche 1 bis 14, dadurch gekennzeichnet, daß das poröse Teil (20; 120) aus Metallkugeln besteht, die durch isostatisches Warmpressen zusammengedrückt worden sind.

18. Gasgenerator nach einem der Ansprüche 1 bis 17, dadurch gekennzeichnet, daß das poröse Teil (20; 120) eine im wesentlichen zylindrische Form hat.

19. Gasgenerator nach einem der Ansprüche 1 bis 17, dadurch gekennzeichnet, daß das poröse Teil (20; 120) im wesentlichen kegelstumpfförmig ist.

20. Gasgenerator nach einem der Ansprüche 1 bis 19, dadurch gekennzeichnet, daß er eine ringförmige, äußere Verbrennungskammer (40) hat.

21. Gasgenerator nach einem der Ansprüche 1 bis 19, dadurch gekennzeichnet, daß er eine Zentralverbrennungskammer (140) hat.

22. Gasgenerator nach einem der Ansprüche 1 bis 21, dadurch gekennzeichnet, daß das poröse Teil (20; 120), in welchem sich wenigstens der erste Treibstoff bewegt, eine Dicke (E) von wenigstens 5 mm hat.

23. Gasgenerator nach einem der Ansprüche 1 bis 22, dadurch gekennzeichnet, daß er eine Höhe (H) zwischen 40 und 120 mm aufweist.

24. Gasgenerator nach einem der Ansprüche 1 bis 23, dadurch gekennzeichnet, daß das poröse Teil (20; 120) einen mittleren Innendurchmesser (D) zwischen 60 und 100 mm aufweist.

25. Gasgenerator nach einem der Ansprüche 1 bis 24, dadurch gekennzeichnet, daß die Verbrennungskammer (40; 140) in radialer Richtung eine Größe (A, R) zwischen 20 und 50 mm aufweist.

26. Gasgenerator nach einem der Ansprüche 1 bis 25, dadurch gekennzeichnet, daß der erste Treibstoff aus flüssigem Wasserstoff und der zweite Treibstoff aus flüssigem Sauerstoff besteht.
